# EUROPÄISCHE PATENTSCHRIFT

(11) **EP 1 872 025 B1**
(45) Veröffentlichungstag und Bekanntmachung des Hinweises auf die Patenterteilung: **04.07.2012**
(21) Anmeldenummer: 06725649.5
(22) Anmeldetag: 07.04.2006
(51) Int. Cl.: F16D 7/02

(54) **RUTSCHKUPPLUNG FÜR ZUMINDEST EIN LAUFRAD EINES GLEISGEBUNDENEN TRIEBFAHRZEUGS**
FRICTION CLUTCH FOR AT LEAST ONE RUNNING WHEEL OF A TRACK-BOUND TRACTION VEHICLE
ACCOUPLEMENT A FRICTION POUR AU MOINS UNE ROUE PORTEUSE D'UN VEHICULE AUTOMOTEUR SUR RAILS

(30) Priorität: 18.04.2005 DE 102005017819
(43) Veröffentlichungstag der Anmeldung: 02.01.2008
(73) Patentinhaber: SIEMENS AKTIENGESELLSCHAFT, 80333 München (DE)
(72) Erfinder: JOOS, Klaus, 92237 Sulzbach-Rosenberg (DE); PFANNSCHMIDT, Bernd, 90574 Rosstal (DE)
(86) Internationale Anmeldenummer: PCT/EP2006/061442
(87) Internationale Veröffentlichungsnummer: WO 2006/111482

(56) Entgegenhaltungen:
- CH-A- 240 933
- CH-A- 460 850
- FR-A- 598 348
- GB-A- 191 211 249
- US-A- 2 620 235

## Beschreibung

Die Erfindung betrifft eine Rutschkupplung für zumindest ein Laufrad eines gleisgebundenen Triebfahrzeugs, wobei das Laufrad an einer Welle befestigt ist und durch einen Motor antreibbar ist.

Bei elektrischen Antrieben von gleisgebundenen Triebfahrzeugen werden heute verbreitet Drehstrom-Asynchronmaschinen in Verbindung mit Leistungsumrichtern eingesetzt. Durch Störungen in der Steuerung des Umrichters kann die Drehstrom-Asynchronmaschine kurzzeitig sehr hohe Brems-Drehmomente erzeugen, die ein Vielfaches des maximalen Betriebsmomentes betragen. Dieses Drehmoment wird auch Stosskurzschlussmoment genannt. Das hervorgerufene ruckartige Bremsen führt zu einer sehr großen Belastung des gesamten Antriebsstrangs.

Bei Bahnen werden zur Übertragung des Antriebs- und auch Bremsdrehmomentes auf den Radsatz bzw. die einzelnen Laufräder Antriebswellen verwendet, welche einen beispielsweise in einem Drehgestell oder Fahrzeugkasten gelagerten Antrieb entsprechend mit den Laufrädern verbinden. Bei abgefederten Antrieben muss diese Achskupplung Relativbewegungen zwischen Rad und Antrieb ausgleichen, z.B. mittels Lenker-, Lamellen - oder Zahnkupplungen.

Es ist bekannt, den Antriebsstrang bei Bahnantrieben so großzügig zu dimensionieren, dass er den Belastungen durch das Stosskurzschlussmoment in der über die Lebensdauer zu erwartenden Anzahl standhält.

Nachteilig ist aber, dass die Überdimensionierung des Antriebsstrangs zu einem deutlich erhöhten Materialeinsatz und einem dementsprechend vergleichsweise hohem Gewicht des Antriebsstrangs führt.

Bekannt ist auch, durch eine Rutschkupplung, deren Losbrechmoment auf einen Wert über dem maximalen Betriebsmoment eingestellt wird, das im Antriebsstrang auftretende Stosskurzschlussmoment zu begrenzen. Die bekannten Rutschkupplungen werden an der Motor- bzw. Ritzelwelle eingesetzt. Im Falle eines elektrischen Kurzschlusses rutscht die Kupplung dann kurzzeitig.

Nachteilig ist hier allerdings, dass die bekannten Rutschkupplungen aufwendig aus vielen Teilen hergestellt werden müssen und durch den Einbau in der Nähe des Motors bei Reparaturen oder Wartungsarbeiten schwer zugänglich sind. Weiterhin können die bekannten Rutschkupplungen bezüglich des maximalen übertragenen Drehmoments nicht nachträglich justiert werden.

**Aus der** US 2 620 235 **ist ein Zwillingsreifen eines Luftfahrzeugs bekannt, bei dem bei Start und Landung der Kontakt zum Boden hergestellt werden soll, ohne dass ein Flattern der Räder auftritt. Dies wird erreicht, indem das Rad in zwei Reibelemente eingeklemmt wird.**

**Aus der** CH 460 850 **ist eine Antriebsanordnung für zwei- oder mehrachsige Triebdrehgestelle von Schienenfahrzeugen bekannt, deren abtreibende Wellen als die jeweilige Treibachse umschließende Hohlwelle ausgebildet sind und diese über eine die Treibachse umschließende Kardanhohlwelle mit dem Treibrad bzw. der Treibachse gekuppelt sind.**

**Aus der** GB 11 249 **ist ein motorbetriebenes Fahrzeug bekannt, bei dem ohne ein Differenzialgetriebe eine Kurvenfahrt einer angetriebenen Achse ermöglicht wird.**

**Aus der** FR 598 348 A **ist ein gleisgebundenes Triebfahrzeug mit einer Rutschkupplung für zumindest ein Laufrad bekannt, wobei das Laufrad an einer Welle befestigt ist und durch einen Motor antreibbar ist und wobei das Laufrad durch den Motor über eine Achskupplungshohlwelle antreibbar ist. Dabei soll dort ein Kraftübertragungssystem geschaffen werden, das nach Bedarf entkuppelt werden kann, so dass beim Anfahren eine bestimmte Zahl von Achsen freigegeben wird und damit nur noch das erforderliche Drehmoment bei der Betriebsdrehzahl gehalten zu werden braucht.**

**Ausgehend davon liegt der Erfindung die Aufgabe zugrunde, eine Rutschkupplung anzugeben, welche einfach herstellbar ist** und welche leicht zugänglich ist. Darüber hinaus soll eine nachträgliche Justierung des maximalen Drehmoments ermöglicht werden.

Diese Aufgabe wird erfindungsgemäß durch die Merkmale des Kennzeichens des Anspruchs 1 gelöst.

Damit wird vorteilhaft erreicht, dass die erfindungsgemäße Rutschkupplung einfach herstellbar ist, da sie gegenüber einer herkömmlichen Flanschverschraubung optional auch nur mit einem weiteren Teil - dem Anpressring - realisiert werden kann. Ein weiterer Vorteil ergibt sich daraus, dass die Rutschkupplung am Laufrad vergleichsweise leichter zugänglich ist als eine Rutschkupplung, welche an der Motor- bzw. Ritzelwelle eingebaut ist. Der Klemmring ist demnach ein Teil der Achskupplung und kann sich gegenüber der Einheit Laufrad und Anpressring im Überlastfall verdrehen. Das Laufrad ist über eine Achskupplung durch einen Traktionsantrieb antreibbar.

Das Laufrad ist durch einen Motor über eine Achskupplungshohlwelle und/oder ein Achskupplungsgelenk antreibbar, welches mit dem Laufrad verbunden ist. Der Klemmring kann nun ein Teil der Achskupplungshohlwelle auf Laufradseite sein oder auf Laufradseite fest mit der Achskupplungshohlwelle verbunden sein. Dann wird das Achskupplungsgelenk nicht benötigt.

Alternativ ist auch vorstellbar, dass der Klemmring ein Teil des Achskupplungsgelenks auf Laufradseite ist oder auf Laufradseite fest mit dem Achskupplungsgelenk verbunden ist. Im diesem alternativen Fall ist das Laufrad über die Rutschkupplung und das Achskupplungsgelenk mit der Achskupplungshohlwelle verbunden.

Dadurch kann eine Federung des Antriebsstrangs vorteilhaft erreicht werden. Die Hohlwelle kann auch sehr kurz ausgeführt sein und im Grenzfall auch nur laufradseitig aus einem Anschluss an das Achskupplungsgelenk bzw. einem Klemmring und motorseitig aus einem Anschluss zur Kraftübertragung bestehen. Damit ist der Antriebsstrang gleichermaßen bei einem Radsatzantrieb und einem Einzelradantrieb einsetzbar.

Vorteilhafter Weise ist an der Welle ein weiteres Laufrad befestigt, welches dann nicht extra angetrieben werden muss und für welches dann auch keine weitere Rutschkupplung vorgesehen werden muss (Radsatzantrieb).

Der Klemmring ist erfindungsgemäß so ausgeführt, dass er an den eingeklemmten Seiten parallele Flächen aufweist oder einen kegelförmigen Querschnitt hat. In beiden Fällen ist vorteilhafter Weise gewährleistet, dass vergleichsweise große Reibflächen zur Verfügung stehen, welche durch Reibung erzeugte Wärme aufnehmen, so dass eine Überhitzungsgefahr unterbunden wird.

Eine weitere vorteilhafte Ausgestaltung der Erfindung ergibt sich, wenn zwischen Anpressring und Klemmring und/oder zwischen Laufrad und Klemmring weitere Elemente vorhanden sind, welche Reibflächen aufweisen. Diese Elemente sind dann als Ringe ausgeformt oder weisen die Form von Bremsklötzen auf. Damit wird vorteilhaft erreicht, dass nur diese Elemente einer Abnutzung unterliegen und nicht der Anpressring oder das Laufrad.

Alternativ ist auch vorstellbar, dass sich an zumindest einer der Klemmflächen, die zwischen Anpressring und Klemmring und zwischen Laufrad und Klemmring ausgebildet sind, ein Reibbelag oder ein Gleitlack befindet.

Die Befestigung des Anpressrings ist erfindungsgemäß durch eine Schraubverbindung mit selbstausrichtenden Muttern mit ovalem Querschnitt und Mitnehmerstiften realisiert. Dies gewährleistet einerseits eine sichere Befestigung des Anpressrings am Laufrad, andererseits aber auch eine leichte Demontage bei Wartungsarbeiten. Gerade aber die Befestigung mittels Schrauben ermöglicht vorteilhafter Weise eine nachträgliche Justierung des maximal zu übertragenden Drehmoments.

Selbstausrichtende Muttern sind jedoch nicht zwingend erforderlich, wenn die Bauteile sehr steif gestaltet sind und in engen Toleranzen gefertigt werden, so dass es nur zu kleinen Verformungen kommt, die durch das Gewindespiel der Verschraubung aufgenommen werden können.

Eine weitere vorteilhafte Ausgestaltung der Erfindung ergibt sich, wenn der Anpressring sich an seiner Außenseite am Laufrad abstützt. Dann nämlich kann der Anpressring auch als Biegebalken ausgestaltet sein. Der Anpressring weist dann zwischen seiner Außenseite und seiner Innenseite eine Verjüngung auf, so dass der Klemmring durch die Innenseite des Anpressrings eingeklemmt wird. Dadurch ist vorteilhafter Weise gewährleistet, dass der Anpressring bei zu hohen Belastungen nachgeben kann und Beschädigungen verhindert werden.

Weiterhin wird erfindungsgemäß neben dem Klemmring ein fest verbundener Zentrierring vorgesehen, welcher formschlüssig in eine Aussparung am Laufrad passt und damit auch den Klemmring in den Außenbacken der Rutschkupplung zentriert. Damit ist vorteilhafter Weise gewährleistet, dass der Klemmring immer optimal von den Außenbacken der Rutschkupplung gehalten wird.

Eine weitere vorteilhafte Ausgestaltung der Erfindung ergibt sich, wenn neben dem Klemmring Abdichtungsringe angebracht sind, so dass die Reibfläche vor Feuchtigkeit und daher vor Korrosion geschützt ist.

Durch den Einbau der erfindungsgemäßen Rutschkupplung in ein gleisgebundenes Triebfahrzeug bzw. in das Drehgestell eines gleisgebundenen Triebfahrzeugs können nun die oben angesprochenen Vorteile realisiert werden. Insbesondere können nun die Wartungszeiten eines gleisgebundenen Triebfahrzeugs reduziert werden, da die Rutschkupplung durch die Erfindung leichter zugänglich ist weil sie mit dem Laufrad verbunden ist, welches von außen zugänglich ist.

Die Erfindung sowie weitere vorteilhafte Ausgestaltungen der Erfindung gemäß den Merkmalen der Unteransprüche werden im folgenden anhand von schematisch dargestellten Ausführungsbeispielen in der Zeichnung näher erläutert, ohne dass dadurch eine Beschränkung der Erfindung auf dieses Ausführungsbeispiel erfolgt; es zeigen:
- FIG 1: einen Antriebsstrang eines gleisgebundenen Triebfahrzeugs;
- FIG 2: eine Rutschkupplung an der Motorwelle;
- FIG 3: eine erfindungsgemäße Rutschkupplung;
- FIG 4: ein weiteres Ausführungsbeispiel einer erfindungsgemäßen Rutschkupplung.

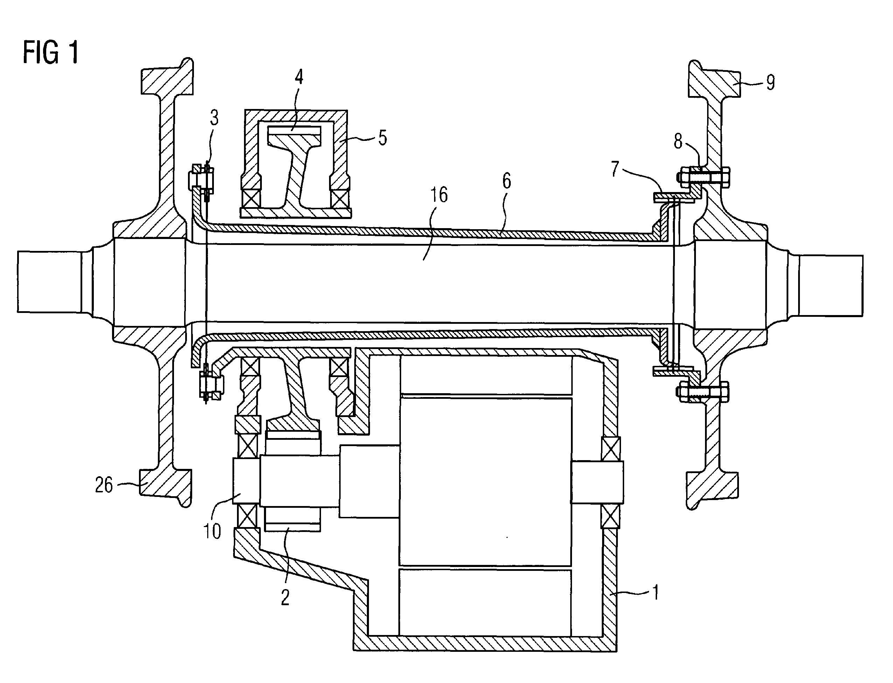

FIG 1 zeigt einen Antriebsstrang eines gleisgebundenen Triebfahrzeugs gemäß dem Stand der Technik. Ein Fahrmotor 1 treibt ein an der Motorwelle 10 befestigtes Motorritzel 2 an. Motorritzel 2 ist über seine Zahnflanken mit dem Getriebegroßrad 4 verbunden, welches in einem einstufigen Getriebe 5 eingebaut ist. Getriebegroßrad 4 ist über ein antriebsseitiges Achskupplungsgelenk 3 mit der Achskupplungshohlwelle 6 verbunden, welche wiederum mit einem radseitigen Achskupplungsgelenk 7 verbunden ist. Das radseitige Achskupplungsgelenk 7 ist mittels einer Flanschverschraubung 8 am Laufrad 9 befestigt. Das Laufrad 9 ist an einer Welle 16 befestigt, an deren anderen Ende ein weiteres Laufrad 26 angebracht ist. Die Achskupplungshohlwelle 6 dient hierbei auch zur Realisierung einer Federung, bei der eine starre Kopplung zwischen Fahrmotor und Laufrädern nicht erwünscht ist. Bei diesem Stand der Technik muss der Antriebsstrang überdimensioniert werden, damit das Stosskurzschlussmoment keine Schäden verursacht.

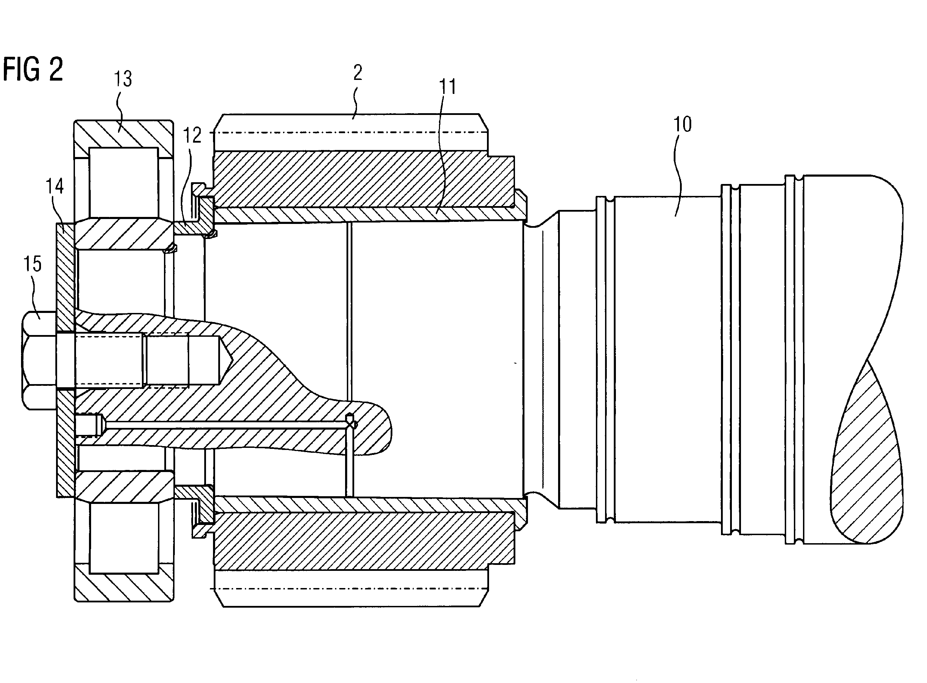

FIG 2 zeigt eine Rutschkupplung gemäß dem Stand der Technik, welche zwischen der Motorwelle 10 und Motorritzel 2 angebracht ist. Hauptbestandteil der Rutschkupplung ist die Rutschbuchse 11, welche bei einem zu hohen zu übertragendem Drehmoment ein Durchrutschen des Motorritzels 2 gegenüber der Motorwelle 10 ermöglicht. Offensichtlich ist es aber nicht möglich, bei einer derartigen Rutschkupplung das maximal zu übertragende Drehmoment nachträglich zu justieren, da dieses wesentlich von der Dimensionierung der beteiligten Komponenten abhängt und damit fest ist.

Weiterhin müssen bei derartigen Rutschkupplungen Maßnahmen getroffen werden, um ein Abrutschen bzw. Verschieben der Rutschbuchse zu verhindern. Hierzu ist eine Konstruktion bestehend aus einer Distanzbuche 12, einem Lager 13, einer Haltescheibe 14 und einer Halteschraube 15 nötig.

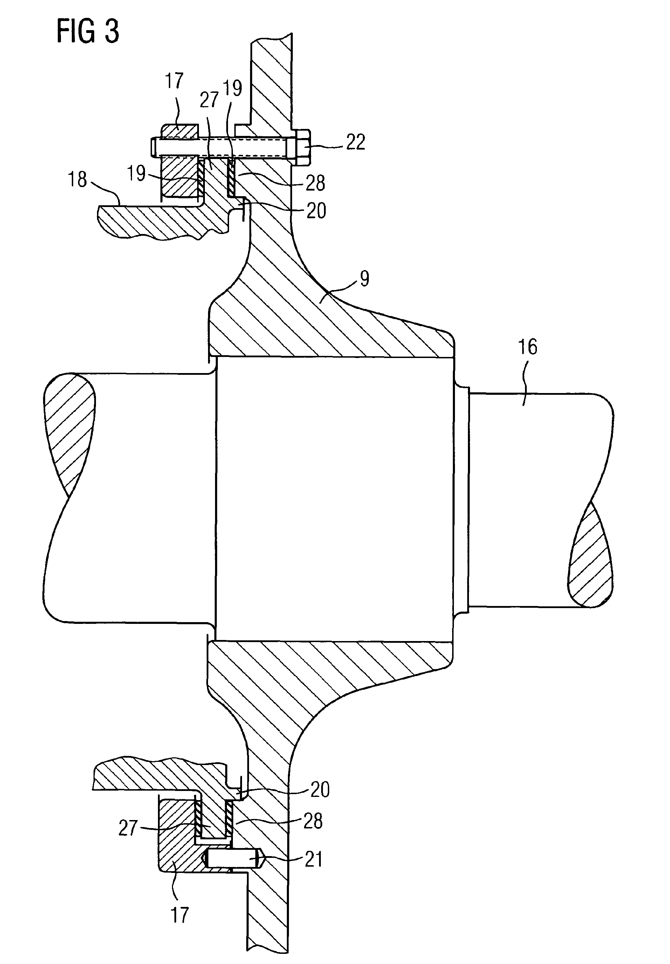

In FIG 3 ist ein Ausführungsbeispiel für die erfindungsgemäße Rutschkupplung gezeigt. Die Rutschkupplung weist ringförmige gegenüberstehende Außenbacken auf, wobei die Außenbacken der Rutschkupplung aus einem Teil 28 des Laufrads 9 und einem Anpressring 17 gebildet werden, wobei der Anpressring 17 fest mit dem Laufrad 9 verbunden ist. Dabei wird ein Klemmring 27 zwischen Anpressring 17 und dem Teil 28 des Laufrads 9 eingeklemmt. Der Klemmring 27 ist Teil eines weiteren Elements 18, welches dem Achskupplungsgelenk 7 oder auch einer Achskupplungshohlwelle 6 alleine entsprechen kann, wenn das Achskupplungsgelenk 7 eingespart wird. Das Teil 28 des Laufrads 9 ist dabei eine Ausformung des Laufrads 9, d.h. Teil 28 und Laufrad 9 sind einstückig. Das Teil 28 kann dabei hervorstehen, jedoch ist dies nicht unbedingt erforderlich. Wie FIG 1 und FIG 3 zeigen, ist das Laufrad 9 durch einen Fahrmotor 1 antreibbar.

Die Welle 16 kann auch als Wellenstumpf ausgebildet sein. Das Laufrad 9 ist dann an einem Wellenstumpf befestigt. D.h., zwei gegenüber liegende Laufräder 9 sind je an einem eigenen Wellenstumpf befestigt. Die Wellenstümpfe sind dann direkt am Drehgestell gelagert.

Der Anpressring 17 ist über Schrauben 22 sowie mittels Mitnehmerstiften 21 gesichert und am Laufrad 9 befestigt. Optional können an den Klemmflächen, die zwischen Anpressring 17 und Klemmring 27 und zwischen Laufrad 9 und Klemmring 27 ausgebildet sind, Reibbeläge 19 befinden. Alternativ ist auch denkbar, dass zwischen Anpressring 17 und Klemmring 27 oder/und zwischen Laufrad 9 und Klemmring 27 weitere Elemente vorhanden sind, welche Reibflächen aufweisen. Dies können z.B. Bremsklötze oder weitere Ringe sein. Weiterhin ist ein Zentrierring 20 neben dem Klemmring 27 vorgesehen, welcher formschlüssig in eine Aussparung am Laufrad 9 passt. Durch den Zentrierring 20 wird gewährleistet, dass der Klemmring 27 immer optimal zwischen den Außenbacken der Rutschkupplung geführt wird.

Tritt also ein Stosskurzschlussmoment auf, so rutscht der Klemmring 27 kurzzeitig zwischen dem Anpressring 17 und dem Teil 28 des Laufrads 9 durch. Danach wird der Klemmring 27 wieder von dem Anpressring 17 und dem Teil 28 des Laufrads 9 gehalten und Drehmoment wird schlupffrei übertragen. Prinzipiell ist auch denkbar, dass die Rutschkupplung aus mehreren Klemmringen 27, mehreren Anpressringen 17 sowie dem Teil 28 des Laufrads 9 gebildet wird. In diesem Fall greifen die Klemmringe 27 in die durch die Anpressringe 17 und dem Teil 28 des Laufrads 9 gebildeten Aussparungen.

Weiterhin kann der Anpressring 17 auch durch zumindest ein Gebilde ersetzt werden, welches den Klemmring 27 einklemmt, welches aber eine andere Form aufweist.

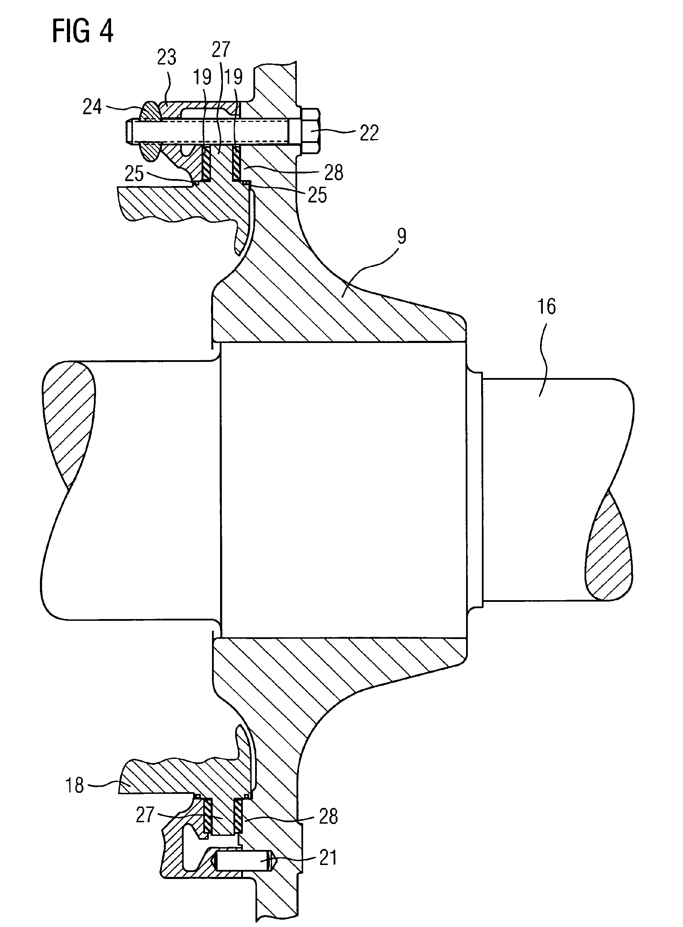

FIG 4 zeigt ein weiteres Ausführungsbeispiel einer erfindungsgemäßen Rutschkupplung. In FIG 4 ist ein modifizierter Anpressring 23 verwendet worden. Der Anpressring 23 weist an der dem Laufrad 9 abgewandten Seite eine Verjüngung auf, so dass der Klemmring 27 nur durch die Innenseite des Anpressrings 23 und das Teil 28 des Laufrads 9 eingeklemmt wird. Der Anpressring 23 ist demnach als Biegebalken ausgestaltet und stützt sich an seiner Außenseite am Laufrad 9 ab. Dadurch ist vorteilhafter Weise gewährleistet, dass der Anpressring 23 bei zu hohen Belastungen nachgeben kann und Beschädigungen verhindert werden. Weiterhin werden selbstausrichtende Muttern 24 für die Schraubverbindung mit den Schrauben 22 verwendet. Der Klemmring 27 wird im Ausführungsbeispiel in FIG 4 mittels zweier Abdichtungsringe 25 zum Schutz vor Feuchtigkeit oder Verschmutzungen abgedichtet. Es ist auch vorstellbar, dass der Bereich des Klemmrings zum Schutz vor Feuchtigkeit oder Verschmutzungen durch eine Haube abgedeckt wird.

## Patentansprüche

1. Gleisgebundenes Triebfahrzeug mit einer Rutschkupplung für zumindest ein Laufrad (9), wobei das Laufrad (9) an einer Welle (16) befestigt ist und durch einen Motor (1) antreibbar ist und wobei das Laufrad (9) durch den Motor (1) über eine Achskupplungshohlwelle (6) antreibbar ist, **dadurch gekennzeichnet , dass** die Rutschkupplung ringförmige gegenüberstehende Außenbacken aufweist, wobei die Außenbacken der Rutschkupplung aus einem Teil (28) des Laufrads (9) und einem Anpressring (17, 23) gebildet werden, wobei der Anpressring (17, 23) fest mit dem Laufrad (9) verbunden ist und ein Klemmring (27) zwischen Anpressring (17, 23) und dem Teil (28) des Laufrads (9) eingeklemmt ist.

2. Gleisgebundenes Triebfahrzeug nach Anspruch 1, **dadurch gekennzeichnet, dass** das Laufrad (9) durch den Motor (1) über eine Achskupplungshohlwelle (6) antreibbar ist.

3. Gleisgebundenes Triebfahrzeug nach Anspruch 1 oder 2, **dadurch gekennzeichnet , dass** das Laufrad (9) durch den Motor (1) über ein Achskupplungsgelenk (7) antreibbar ist, welches mit dem Laufrad (9) über die Rutschkupplung verbunden ist.

4. Gleisgebundenes Triebfahrzeug nach einem oder mehreren der Ansprüche 1 bis 3, **dadurch gekennzeichnet, dass** an der Welle (16) ein weiteres Laufrad (26) befestigt ist.

5. Gleisgebundenes Triebfahrzeug nach einem oder mehreren der Ansprüche 1 bis 4, **dadurch gekennzeichnet , dass** der Klemmring (27) ein Teil der Achskupplungshohlwelle (6) auf Laufradseite ist oder auf Laufradseite fest mit der Achskupplungshohlwelle (6) verbunden ist.

6. Gleisgebundenes Triebfahrzeug nach einem oder mehreren der Ansprüche 1 bis 4, **dadurch gekennzeichn e t** , dass der Klemmring (27) ein Teil des Achskupplungsgelenks (7) auf Laufradseite ist oder auf Laufradseite fest mit dem Achskupplungsgelenk (7) verbunden ist.

7. Gleisgebundenen Triebfahrzeug nach Anspruch 6, **dadurch gekennzeichnet , dass** das Laufrad (9) über das Achskupplungsgelenk (7) mit der Achskupplungshohlwelle (6) verbunden ist.

8. Gleisgebundenes Triebfahrzeug nach Anspruch 5, 6 oder 7, **dadurch gekennzeichnet , dass** der Klemmring (27) an den eingeklemmten Seiten parallele Flächen aufweist.

9. Gleisgebundenes Triebfahrzeug nach Anspruch 5, 6 oder 7, **dadurch gekennzeichnet , dass** der Klemmring (27) einen kegelförmigen Querschnitt hat.

10. Gleisgebundenes Triebfahrzeug nach einem oder mehreren der Ansprüche 1 bis 9, **dadurch gekennzeichnet, dass** zwischen Anpressring (17, 23) und Klemmring (27) oder/und zwischen Laufrad (9) und Klemmring (27) weitere Elemente vorhanden sind, welche Reibflächen aufweisen.

11. Gleisgebundenes Triebfahrzeug nach einem oder mehreren der Ansprüche 1 bis 10, **dadurch gekennzeichnet , dass** sich an zumindest einer der Klemmflächen, die zwischen Anpressring (17, 23) und Klemmring (27) und zwischen Laufrad (9) und Klemmring (27) ausgebildet sind, zusätzlich ein Reibbelag (19) befindet.

12. Gleisgebundenes Triebfahrzeug nach einem oder mehreren der Ansprüche 1 bis 11, **dadurch gekennzeichnet , dass** sich an zumindest einer der Klemmflächen, die zwischen Anpressring (17, 23) und Klemmring (27) und zwischen Laufrad (9) und Klemmring (27) ausgebildet sind, ein Gleitlack befindet.

13. Gleisgebundenes Triebfahrzeug nach einem oder mehreren der Ansprüche 1 bis 12, **dadurch gekennzeichnet , dass** der Anpressring (17, 23) durch zumindest eine Schraubverbindung (22) am Laufrad (9) befestigt ist.

14. Gleisgebundenes Triebfahrzeug nach Anspruch 13, **dadurch gekennzeichnet , dass** die Schraubverbindungen (22) mittels selbstausrichtenden Muttern (24) mit ovalem Querschnitt gesichert sind.

15. Gleisgebundenes Triebfahrzeug nach Anspruch 13 oder 14, **dadurch gekennzeichnet, dass** der Anpressring (17, 23) zusätzlich durch zumindest einen Mitnehmerstift (21) gesichert ist.

16. Gleisgebundenes Triebfahrzeug nach einem oder mehreren der Ansprüche 1 bis 15, **dadurch gekennzeichnet , dass** der Anpressring (17, 23) sich an seiner Außenseite am Laufrad (9) abstützt.

17. Gleisgebundenes Triebfahrzeug nach Anspruch 16, **dadurch gekennzeichnet , dass** die dem Laufrad (9) abgewandte Seite des Anpressrings (23) als Biegebalken ausgestaltet ist.

18. Gleisgebundenes Triebfahrzeug nach einem oder mehreren der Ansprüche 1 bis 17, **dadurch gekennzeichnet , dass** dem Klemmring (27) ein Zentrierring (20) zugeordnet ist, welcher formschlüssig in eine Aussparung am Laufrad (9) passt.

19. Gleisgebundenes Triebfahrzeug nach einem oder mehreren der Ansprüche 1 bis 18, **dadurch gekennzeichnet , dass** dem Klemmring (27) zumindest ein Abdichtungsring (25) zugeordnet ist, um die Reibflächen abzudichten.

20. Drehgestell mit zumindest einem laufrad, wobei dar laufrad (9) an einer Welle (16) befestigt ist und durch einen Motor (1) antreibbar ist und wobei das laufrad (9) durch den Motor (1) über eine Achskupplungs hehlwelle (6) antreibbar ist, für ein gleisgebundenes Triebfahrzeug, wobei dar Drehgestellmit zumindest einer Rutschkupplung nach einem oder mehreren der Ansprüche 1 bis 19 versehen ist.

## Claims

1. Track-bound traction vehicle having a friction clutch for at least one running wheel (9) of a, wherein the running wheel (9) is attached to a shaft (16) and can be driven by a motor (1), and wherein the running wheel (9) can be driven by the motor (1) via an axle clutch hollow shaft (6), **characterized in that** the friction clutch has annular, outer jaws, lying opposite one another of the friction clutch are formed from a part (28) of the running wheel (9) and a compression ring (17, 23), wherein the compression ring (17, 23) is permanently connected to the running wheel (9), and a clamping ring (27) is clamped in between the compression ring (17, 23) and the part (28) of the running wheel (9).

2. Track-bound traction vehicle according to Claim 1, **characterized in that** the running wheel (9) can be driven by the motor (1) via an axle clutch hollow shaft (6).

3. Track-bound traction vehicle according to Claim 1 or 2, **characterized in that** the running wheel (9) can be driven by the motor (1) via an axle clutch joint (7) which is connected to the running wheel (9) via the friction clutch.

4. Track-bound traction vehicle according to one or more of Claims 1 to 3, **characterized in that** a further running wheel (26) is attached to the shaft (16).

5. Track-bound traction vehicle according to one or more of Claims 1 to 4, **characterized in that** the clamping ring (27) is a part of the axle clutch hollow shaft (6) on the running wheel side or is permanently connected to the axle clutch hollow shaft (6) on the running wheel side.

6. Track-bound traction vehicle according to one or more of Claims 1 to 4, **characterized in that** the clamping ring (27) is a part of the axle clutch joint (7) on the running wheel side or is permanently connected to the axle clutch joint (7) on the running wheel side.

7. Track-bound traction vehicle according to Claim 6, **characterized in that** the running wheel (9) is connected to the axle clutch hollow shaft (6) via the axle clutch joint (7).

8. Track-bound traction vehicle according to Claim 5, 6 or 7, **characterized in that** the clamping ring (27) has parallel faces on the clamped-in sides

9. Track-bound traction vehicle according to Claim 5, 6 or 7, **characterized in that** the clamping ring (27) has a conical cross section.

10. Track-bound traction vehicle according to one or more of Claims 1 to 9, **characterized in that** further elements which have friction faces are provided between the compression ring (17, 23) and the clamping ring (27) and/or between the running wheel (9) and the clamping ring (27).

11. Track-bound traction vehicle according to one or more of Claims 1 to 10, **characterized in that** in addition a friction lining (19) is located on at least one of the clamping faces which are formed between the compression ring (17, 23) and clamping ring (27) and between the running wheel (9) and clamping ring (27).

12. Track-bound traction vehicle according to one or more of Claims 1 to 11, **characterized in that** an antifriction coating agent is located on at least one of the clamping faces which are formed between the compression ring (17, 23) and clamping ring (27) and between the running wheel (9) and clamping ring (27).

13. Track-bound traction vehicle according to one or more of Claims 1 to 12, **characterized in that** the compression ring (17, 23) is attached to the running wheel (9) by means of at least one screw connection (22).

14. Track-bound traction vehicle according to Claim 13, **characterized in that** the screw connections (22) are secured by means of self-aligning nuts (24) with an oval cross section.

15. Track-bound traction vehicle according to Claim 13 or 14, **characterized in that** the compression ring (17, 23) is additionally secured by means of at least one driver pin (21).

16. Track-bound traction vehicle according to one or more of Claims 1 to 15, **characterized in that** the outer side of the compression ring (17, 23) is supported on the running wheel (9).

17. Track-bound traction vehicle according to Claim 16, **characterized in that** the side of the compression ring (23) which faces away from the running wheel (9) is embodied as a flexural bar.

18. Track-bound traction vehicle according to one or more of Claims 1 to 17, **characterized in that** a centering ring (20), which fits in a positively engaging fashion into a cut-out on the running wheel (9), is assigned to the clamping ring (27).

19. Track-bound traction vehicle according to one or more of Claims 1 to 18, **characterized in that** at least one sealing ring (25) is assigned to the clamping ring (27) in order to seal the friction faces.

20. Bogey, having at least one running wheel, wherein the running wheel (9) is attached to a shaft (16) and can be driven by a motor (1) and wherein the running wheel (9) can be driven by the motor via an axle clutch hollow shaft (6), for a track-bound traction vehicle, wherein the bogey is provided with at least one friction clutch according to one or more of Claims 1 to 19.

## Revendications

1. Véhicule de traction sur rails comprenant un accouplement à friction pour au moins une roue (9) porteuse, la roue (9) porteuse étant fixée à un arbre (16) et pouvant être entraînée par un moteur (1) et dans lequel la roue (9) porteuse peut être entraînée par le moteur (1) par l'intermédiaire d'un arbre (6) creux d'accouplement d'essieu, **caractérisé en ce que** l'accouplement à friction comporte des mâchoires extérieures opposées et annulaires, les mâchoires extérieures de l'accouplement à friction étant formées d'une partie (28) de la roue (9) porteuse et d'un anneau ( 17, 23 ) de pression, l'anneau ( 17, 23 ) de pression étant solidaire de la roue (9) porteuse et un anneau (27) de serrage étant serré entre l'anneau ( 17, 23 ) de pression et la partie ( 28 ) de la roue ( 9 ) porteuse.

2. Véhicule de traction sur rails suivant la revendication 1, **caractérisé en ce que** la roue ( 9 ) porteuse peut être entraînée par le moteur ( 1 ) par l'intermédiaire d'un arbre ( 6 ) creux d'accouplement d'essieu.

3. Véhicule de traction sur rails suivant la revendication 1 ou 2, **caractérisé en ce que** la roue ( 9 ) porteuse peut être entraînée par le moteur ( 1 ) par l'intermédiaire d'une articulation ( 7 ) d'accouplement d'essieu, qui est reliée à la roue ( 9 ) porteuse par l'accouplement à friction.

4. Véhicule de traction sur rails suivant l'une ou plusieurs des revendications 1 à 3, **caractérisé en ce qu'**une autre roue ( 26 ) porteuse est fixée à l'arbre ( 16 ).

5. Véhicule de traction sur rails suivant l'une ou plusieurs des revendications 1 à 4, **caractérisé en ce que** l'anneau ( 27 ) de serrage fait partie de l'arbre ( 6 ) creux d'accouplement d'essieu du côté de la roue porteuse ou est solidaire de l'arbre ( 6 ) creux d'accouplement d'essieu du côté de la roue porteuse.

6. Véhicule de traction sur rails suivant l'une ou plusieurs des revendications 1 à 4, **caractérisé en ce que** l'anneau ( 27 ) de serrage fait partie de l'articulation ( 7 ) d'accouplement d'essieu du côté de la roue porteuse ou est solidaire de l'articulation ( 7 ) d'accouplement d'essieu du côté de la roue porteuse.

7. Véhicule de traction sur rails suivant la revendication 6, **caractérisé en ce que** la roue ( 9 ) porteuse est reliée à l'arbre ( 6 ) creux d'accouplement d'essieu par l'articulation ( 7 ) d'accouplement d'essieu.

8. Véhicule de traction sur rails suivant la revendication 5, 6 ou 7, **caractérisé en ce que** l'anneau ( 27 ) de serrage a des surfaces parallèles sur les côtés serrés.

9. Véhicule de traction sur rails suivant la revendication 5, 6 ou 7, **caractérisé en ce que** l'anneau ( 27 ) de serrage a une section transversale en forme de cône.

10. Véhicule de traction sur rails suivant l'une ou plusieurs des revendications 1 à 9, **caractérisé en ce que** d'autres éléments, qui ont des surfaces de friction, sont présents entre l'anneau ( 17, 23 ) de pression et l'anneau ( 27 ) de serrage ou/et entre la roue ( 9 ) porteuse et l'anneau ( 27 ) de serrage.

11. Véhicule de traction sur rails suivant l'une ou plusieurs des revendications 1 à 10, **caractérisé en ce que** sur au moins l'une des surfaces de serrage, qui sont formées entre l'anneau ( 17, 23 ) de pression et l'anneau ( 27 ) de serrage et entre la roue ( 9 ) porteuse et l'anneau ( 27 ) de serrage, se trouve supplémentairement une garniture ( 19 ) de friction.

12. Véhicule de traction sur rails suivant l'une ou plusieurs des revendications 1 à 11, **caractérisé en ce que** sur au moins l'une des surfaces de serrage, qui sont formées entre l'anneau ( 17, 23 ) de pression et l'anneau ( 27 ) de serrage et entre la roue ( 9 ) porteuse et l'anneau ( 27 ) de serrage, se trouve au moins un vernis de glissement.

13. Véhicule de traction sur rails suivant l'une ou plusieurs des revendications 1 à 12, **caractérisé en ce que** l'anneau ( 17, 23 ) de pression est fixé à la roue ( 9 ) porteuse par au moins un vissage ( 22 ).

14. Véhicule de traction sur rails suivant la revendication 13, **caractérisé en ce que** les vissages ( 22 ) sont serrés au moyen d'écrous ( 24 ) s'alignant automatiquement et de section transversale ovale.

15. Véhicule de traction sur rails suivant la revendication 13 ou 14, **caractérisé en ce que** l'anneau ( 17, 23 ) de pression est bloqué supplémentairement par au moins une broche ( 21 ) d'entraînement.

16. Véhicule de traction sur rails suivant l'une ou plusieurs des revendications 1 à 15, **caractérisé en ce que** l'anneau ( 17, 23 ) de pression s'appuie par son côté extérieur sur la roue ( 9 ) porteuse.

17. Véhicule de traction sur rails suivant la revendication 16, **caractérisé en ce que** le côté de l'anneau ( 23 ) de pression, éloigné de la roue ( 9 ) porteuse, est conformé en poutre de flexion.

18. Véhicule de traction sur rails suivant l'une ou plusieurs des revendications 1 à 17, **caractérisé en ce qu'**à l'anneau ( 27 ) de serrage est associé un anneau ( 20 ) de centrage, qui s'adapte à complémentarité de forme dans un évidement de la roue ( 9 ) porteuse.

19. Véhicule de traction sur rails suivant l'une des revendications 1 à 18, **caractérisé en ce qu'**à l'anneau ( 27 ) de serrage est associé au moins un joint ( 25 ) annulaire pour rendre étanche les surfaces de friction.

20. Bogie ayant au moins une roue porteuse, la roue ( 9 ) porteuse étant fixée à un arbre ( 16 ) et pouvant être entraînée par un moteur ( 1 ) et la roue ( 9 ) porteuse pouvant être entraînée par le moteur ( 1 ) par l'intermédiaire d'un arbre ( 16 ) creux d'accouplement d'essieu pour un véhicule de traction sur rails, dans lequel le bogie est pourvu d'au moins un accouplement à friction suivant l'une ou plusieurs des revendications 1 à 19.
